# EUROPEAN PATENT APPLICATION

(11) **EP 1 006 172 A1**
(43) Date of publication of application: **07.06.2000**
(21) Application number: 99120379.5
(22) Date of filing: 13.10.1999
(51) Int. Cl.: C10L 5/40

(54) **Synthetic fire logs**

(30) Priority: 03.12.1998 GB 9826410
(71) Applicant: Swedish Match UK Limited, High Wycombe, Buckinghamshire HP13 6EJ (GB)
(72) Inventor: Cox, Michael, 56436 Bankeryd (SE)
(74) Representative: Harman, Michael Godfrey

(57) **Abstract**

A mixture includes paraffin wax and a thickening agent, the thickening agent being pseudoplastic above the melting point of the paraffin wax. The paraffin wax ideally makes up 50-99%w of the mixture ,and the thickening agent 1-40%w of the mixture. The thickening agent includes diatomaceous earth. The mixture may include abrasive material, fibrous particles, and talc to affect its texture when applied to an article. Also disclosed is a synthetic log of combustible material including wood waste and a hydrocarbon (such as paraffin wax), and a coating applied in a state of low viscosity so as to partially or wholly cover the surface of the log, which then sets. This coating is ideally the mixture defined above. The log may be wrapped in a sleeve which features a transparent window, so the coating can be viewed, especially if the coating is only applied to part of the log's surface.

## Description

The present invention relates to synthetic fire logs, that is, logs manufactured as substitutes for natural wood logs.

Synthetic fire logs are usually composed of a mixture which includes wax and wood waste, a typical mixture ratio being 60% wax to 40% wood waste. This mixture is greasy to the touch, and inclined to crumble when being handled. After the mixture has been extruded in a cylindrical shape and cut into convenient lengths to form the log, it is usually wrapped in a polythene lined paper sleeve which is sealed at both ends.

This wrapping stops fragments of the log from dropping off, and makes the log less messy to handle, as the polythene does not permit oily elements in the log to soak into the paper. The polythene also provides additional fuel value to the log. This paper is also useful as a means of carrying instructions and other information about the log, and as a means of lighting the log. A typical log might weigh 1.25 kg and burn for 2½ hours.

A known type of firelighter is also composed of such a mixture of wood waste and paraffin wax.

Though effective, easy to light and very popular, the paper wrapped logs are not very attractive, whereas a real log fire retains a romantic appeal. Wrapping the logs in the paper requires dedicated equipment, and the paper is also in danger of being torn.

The object of the present invention is to efficiently provide a synthetic log which resembles more closely a natural wooden log, whilst retaining the convenience to the user of the paper wrapped logs of the prior art.

According to the present invention there is provided a mixture including paraffin wax and a thickening agent, the thickening agent being such that above the melting point of the paraffin wax the mixture is pseudoplastic as herein defined. Preferably, paraffin wax makes up 50-99%w of the mixture. Preferably, the thickening agent makes up 1-40%w of the mixture, and preferably, this thickening agent includes diatomaceous earth.

According to another aspect of the invention, there is provided a synthetic log comprising a portion of combustible material including wood waste and a hydrocarbon, and a coating of a different material upon part of the outer surface of the log, said coating being applied in a state of low viscosity so as to partially cover the surface of the log, and thereafter setting. Preferably the material of the coating comprises a pseudoplastic mixture such as described above.

According to a development of the invention, there is provided a synthetic log whose cross section is a quadrant. Preferably, two coatings are applied, one coating resembling bark applied to the curved surface 24, and the other coating resembling freshly cleaved wood being applied to the rectangular surfaces 22.

According to another embodiment of the invention, there is provided a synthetic log or firelighter made entirely out of a mixture of paraffin wax and filler material

The wood waste and wax mixture of prior art logs is a dark brown colour. It cannot though conveniently be sold without being wrapped for the reasons outlined above. A material is needed that retains the convenience of the paper wrapped product, that is, is clean, durable, and easy to light, but has a rheology which allows it to be easily formed so as to have a texture resembling wood. Ideally then, it should be applicable in the manner of a paint, but quickly set so as to be hard to the touch, and should not drip whilst burning. It must also have a brown colour.

Paraffin wax is readily inflammable, and has a convenient melting point, being molten above 50°C. When molten paraffin wax is mixed with a thickening agent or filler such a diatomaceous earth, the resulting mixture forms a thick, strongly pseudoplastic paste, that is, the mixture has a high viscosity when a low shear force is applied, and a low viscosity when a high shear force is applied.

Such a mixture may be applied in the manner of a paint, but will retain a texture imparted upon it. Whilst the mixture is burning, it retains its pseudoplasticity, and does not drip. The proportion of thickening agent determines the pseudoplasticity of the mixture. The mixture also hardens as the wax solidifies on the cool log.

Such a mixture may be easily applied around a conventional log so as to fulfil the functions of the paper wrapping, that is, to hold the log together and help light it, and also mimic the look and texture of a natural log, which the paper is not able to do.

To substitute for the paper, the mixture must form a coat that is strong and tough enough to protect the log material beneath the coating, and be inflammable enough to be easily set alight. In order to accurately resemble natural wood, the mixture should be easily mouldable, but should not drip while burning.

A synthetic log embodying the invention will now be described, by way of example, with reference to the drawings, of which;
Figure 1 is a synthetic log,
Figure 2 is another embodiment of a synthetic log, and
Figure 3 is a further embodiment of a synthetic log, and a paper sleeve witch has been partially cut away.

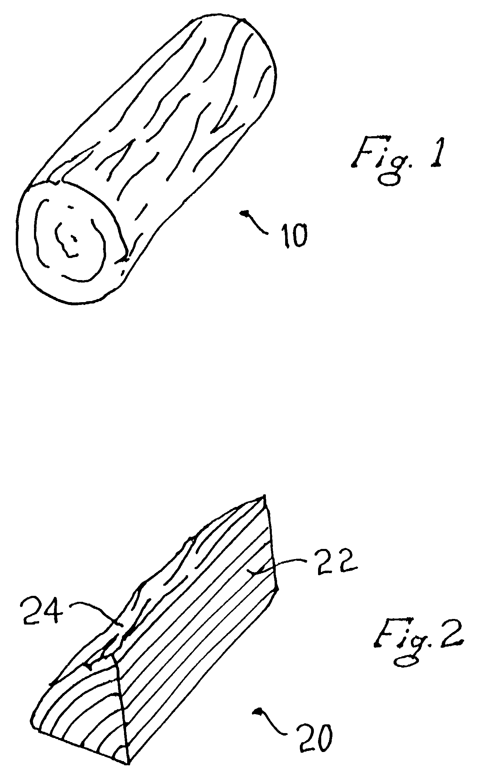

A log of conventional type, being made of wood waste and wax in the ratio of 40:60, is extruded and cut so as to from a short cylinder in the usual way. The log is then coated with a material which resembles the bark of a tree. The resulting textured log 10 is shown in Figure 1. The coating is a dark brown colour, and a similar roughness and texture to that of bark.

70%w paraffin wax (refined MP 52-54° C) is melted and mixed with 26%w diatomaceous earth, 3%w red iron oxide and 1%w black iron oxide to produce a thick paste. The paraffin wax is molten above 50°C, though ideally the mixture is heated to 80°C in order to apply it. Applied in a thick layer (typically 0.5mm to 2mm) by brush to the log, the coating cools and sets in a few seconds. Continual brushing of the coating until it has set brings out a bark like texture. The coating may also be applied by rollers, subsequent patterned rollers imprinting a texture upon the coating. The red and black iron oxides give the mixture a dark brown colour.

The addition of the diatomaceous earth causes the mixture to be pseudoplastic, that is, the mixture has a high viscosity at low shear rates, but a low viscosity at high shear rates. Because of this, it is easily applied and after application accepts a texture imprinted upon it, both these operations applying relatively high shear rates. The coating and texture will not deform whilst setting, as under the low shear rates experienced it is more viscous.

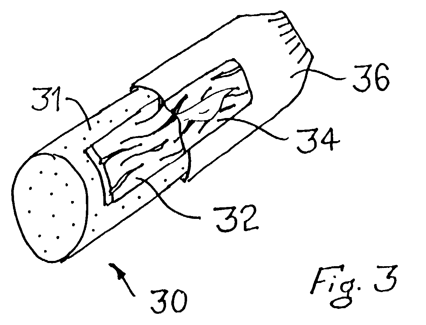

Referring to Figure 2, in another embodiment of the invention a log of conventional composition is extruded so as to have a quadrant cross section (i.e. a 90° sector of a circle). The log could also be moulded in this shape. The shape represents a natural log which has been axially cut into quarters. The mixture given above is applied in a similar fashion to the curved surface so as to resemble bark. Another mixture, comprising 76%w paraffin wax and 24%w diatomaceous earth, is applied to the two rectangular surfaces. This mixture is less viscous than the formerly described mixture, and is spread more thinly (typically 0.1mm to 0.5 mm thick) with little brushing. The mixture, being thinner the mixture described in the first embodiment, retains the fine texture imparted by the bristles of the brush, so as to look alike to the parallel lines of naturally occurring wood grain. This mixture has a lighter hue, and resembles a freshly cleaved surface of a natural log. The hue may be lightened further by adding a white pigment such as approximately 2-3%w titanium dioxide. The ends of log, and of the cylindrical log described above, may also be coated with this lighter mixture, or they may be coated with the dark material described formerly.

Referring to figure 3, an otherwise conventional cylindrical log 30 composed mainly of a parrafin wax and wood waste 31 includes a strip 32 of paraffin wax, wood waste and diatomaceous earth mixture, as described above, applied in a axial direction upon the outer surface of the log. A texture is formed, using say a method described above, so that the strip has the appearance of bark. The log is then wrapped in a polythene lined paper sleeve 36, this sleeve featuring a transparent window 34 of a similar shape to the strip applied to the log, but of a smaller size. The transparent window is aligned with the strip of mixture, so that the mixture is visible through the window.

Viewed though the window, the log now has the appearance of wood, whilst only a small amount of the mixture (which may more expensive than an ordinary log mixture) need be used. The log is placed in its intended burning position with the paper sleeve intact. The burning of the log is started by lighting the paper sleeve. The strip of mixture soon starts burning, and helps the conventional mixture of the log to ignite. A strip of the mixture may be applied to a log simply to aid combustion, even if the log is to be completely wrapped in opaque material and the mixture never visible.

The proportions of paraffin wax and thickening agent given in the embodiments are only illustrative of particular mixtures which may be applied to a synthetic log. The mixture could contain between 50-99%w paraffin wax, 1-40%w diatomaceous earth, and up to 10%w pigment.

For this application it is desirable to impart pseudoplasticity to the molten paraffin wax by using a thickening agent making up a low solid content of the final mixture. Materials which achieve this generally have a relatively low bulk density, and are made up of acicular, plate-like or spiky particles. Other thickening agents, such as fumed silica and soaps, may be used instead of the diatomaceous earth, in which case the quantity of thickening agent needed to impart pseudoplasticity upon the paraffin wax may be as low as 1%w, so that the mixture could contain between 50-99%w paraffin wax, 1-40%w thickening agent, and up to 10%w pigment.

In the embodiments described above, the mixture solidifies after it has cooled below the melting point of the wax, which happens rapidly after coming into contact with the log. Equally, the mixture could be made of such a nature that it sets upon drying, curing or similar process.

Other additives could be added so as to change the characteristics of the coating. Various oil compatible pigments may be used instead of or in addition to those mentioned here. In order to alter the texture of the coating. fibrous material such as sawdust or wood flour may be added for a rougher heavier texture, or sand for a more abrasive surface. Talc may be added, either throughout the mixture or brushed on the surface, to reduce the glossiness of the coating. The tale appears much like the natural bloom found upon some bark, and reduces any greasy feeling of the coating. Naturally, conventional additives such as flame colourants and perfumes could be included in the mixture.

The mixture may also be formed into solid blocks composed only of the mixture itself, to form firelighters for instance, or indeed an entire log.

## Claims

1. A mixture including paraffin wax and a thickening agent, the thickening agent being such that above the melting point of the paraffin wax the mixture is pseudoplastic as herein defined.

2. A mixture according to claim 1, wherein the paraffin wax makes up 50-99%w of the mixture.

3. A mixture according to either previous claim wherein the thickening agent makes up 1-40%w of the mixture.

4. A mixture according to any previous claim, wherein the thickening agent includes diatomaceous earth.

5. A mixture according to any previous claim wherein the mixture includes abrasive material.

6. A mixture according to any previous claim wherein the mixture includes fibrous particles.

7. A mixture according to any previous claims wherein the mixture includes talc.

8. A synthetic log comprising a portion of conbustible material including wood waste and a hydrocarbon, and a coating of a different material upon part of the outer surface of the log, said coating being applied in a state of low viscosity so as to partially or wholly cover the surface of the log, and thereafter setting.

9. A synthetic log according to claim 8, wherein the material of the coating comprises a mixture according to any of claims 1 to 7.

10. A synthetic log according to either claim 9, wherein the log is wrapped in a sleeve which features a transparent window.
